# EUROPÄISCHE PATENTSCHRIFT

(11) **EP 3 725 061 B1**
(45) Veröffentlichungstag und Bekanntmachung des Hinweises auf die Patenterteilung: **17.08.2022**
(21) Anmeldenummer: 18833892.5
(22) Anmeldetag: 27.12.2018
(51) Int. Cl.: H04L 69/14, H04L 67/55, H04L 67/145, H04L 69/08, H04L 67/56, H04L 67/146

(54) **VERFAHREN ZUM BETREIBEN EINES KOMMUNIKATIONSSYSTEMS SOWIE KOMMUNIKATIONSSYSTEM**
METHOD FOR OPERATING A COMMUNICATION SYSTEM, AND COMMUNICATION SYSTEM
PROCÉDÉ DE FONCTIONNEMENT D'UN SYSTÈME DE COMMUNICATION AINSI QUE SYSTÈME DE COMMUNICATION

(30) Priorität: 23.01.2018 DE 102018201011
(43) Veröffentlichungstag der Anmeldung: 21.10.2020
(73) Patentinhaber: Siemens Mobility GmbH, 81739 München (DE)
(72) Erfinder: HARSCH, Waldemar, 30519 Hannover (DE)
(86) Internationale Anmeldenummer: PCT/EP2018/097015
(87) Internationale Veröffentlichungsnummer: WO 2019/145109

(56) Entgegenhaltungen:
- US-A1- 2003 177 228
- US-A1- 2014 211 637

## Beschreibung

Im Rahmen des Betriebs eines Kommunikationssystems tritt häufig die Situation auf, dass mehrere Kommunikationseinheiten, etwa in Form entsprechender Geräte, über ein oder mehrere Kommunikationsnetzwerke miteinander verbunden sind. In Abhängigkeit von den jeweiligen Gegebenheiten und Anforderungen können hierbei im Rahmen der Kommunikation zwischen den Kommunikationseinheiten zur Ausfallerkennung zyklisch Lebensnachrichten versendet werden. Diese können auch als "heart-beat"- "alive"- oder "life-sign"-Nachrichten bezeichnet werden und dienen üblicherweise dazu, den jeweiligen Kommunikationspartner darüber zu informieren, dass eine die jeweilige Lebensnachricht sendende Kommunikationseinheit noch reaktionsfähig ist. Darüber hinaus kann die Möglichkeit vorgesehen sein, dass der die Lebensnachricht empfangenden Kommunikationseinheit anhand einer in der Lebensnachricht beinhalteten Information die Möglichkeit gegeben wird, zu prüfen, ob alle vorhergehenden Nachrichten, d.h. insbesondere solche, mit denen eine Datenübertragung von Nutzdaten erfolgt ist, empfangen wurden.

Vorzugsweise können entsprechende Lebensnachrichten zwischen allen Kommunikationseinheiten eines Kommunikationssystems, die miteinander Kommunikationsbeziehungen haben, übermittelt werden. Sofern für einen definierten Zeitraum keine gültige Nachricht empfangen wird, so kann die jeweilige empfangende Kommunikationseinheit davon ausgehen, dass der Kommunikationspartner, d.h. die jeweilige sendende Kommunikationseinheit, nicht mehr reaktionsfähig oder aber die Kommunikationsverbindung gestört ist. Dies ermöglicht es der empfangenden Kommunikationseinheit selbst eine erforderliche beziehungsweise zweckmäßige Reaktion abzuleiten und umzusetzen. Eine entsprechende Reaktion kann beispielsweise darin bestehen, dass das Kommunikationssystem beziehungsweise das Gesamtsystem, dessen Bestandteil das Kommunikationssystem ist, einen sicheren Zustand einnimmt.

Sofern nun eine Kommunikationseinheit zu vielen anderen Kommunikationseinheiten entsprechende Lebensnachrichten beziehungsweise Lebenstakte generieren muss, d.h. beispielsweise in einer 1-zu-n-Beziehung, kann dies zu Problemen führen. Beispielhaft sei an dieser Stelle eine Stellwerkslogik beziehungsweise eine zentrale Steuereinrichtung eines Stellwerks genannt, die mit vielen dezentralen Steuereinrichtungen beziehungsweise Elementen des Stellwerks überwachte Nachrichtenwege hat und für jede dieser dezentralen Steuereinrichtungen eine Lebensnachricht generiert. Falls darüber hinaus durch die zentrale Steuereinrichtung von den dezentralen Steuereinrichtungen ebenfalls entsprechende Lebensnachrichten empfangen werden, so besteht darüber hinaus die Notwendigkeit, diese seitens der zentralen Steuereinrichtung zu empfangen und auszuwerten. Die Verwaltung vieler entsprechender Instanzen und beispielsweise eine jeweilige Berechnung von Codesicherungs- und Securityanhängen kann hierbei zu einer erheblichen Reduzierung der Leistungsfähigkeit beziehungsweise Performance des Kommunikationssystems führen. Dies bedeutet, dass im Ergebnis entweder die Reaktionszeit des Gesamtsystems verringert wird oder aber eine Aufteilung der Logik auf mehrere Systeme erforderlich wird. Hierdurch wird jedoch die Skalierbarkeit des Kommunikationssystems beeinträchtigt. Darüber hinaus führt dies in der Regel zu einem komplexeren Aufbau des Kommunikationssystems und zu höheren Kosten.

In dem Dokument US 2003/177228 A1 ist ein Verfahren und ein Computer beschrieben, in dem Kommunikationsverbindungen zwischen einzelnen Knoten zum Einsatz kommen. Diese Kommunikationsverbindungen werden genutzt, um Daten zwischen den einzelnen Knoten auszutauschen.

Der vorliegenden Erfindung liegt die Aufgabe zugrunde, ein besonders leistungsfähiges und zugleich vergleichsweise aufwandsarm zu realisierendes Verfahren zum Betreiben eines Kommunikationssystems anzugeben.

Diese Aufgabe wird erfindungsgemäß gelöst durch ein Verfahren zum Betreiben eines Kommunikationssystems mit einer ersten Kommunikationseinheit und zumindest einer zweiten Kommunikationseinheit, wobei zwischen der ersten Kommunikationseinheit und der zumindest einen zweiten Kommunikationseinheit zur Datenübertragung logische Kommunikationsverbindungen verwendet werden und zwischen der ersten Kommunikationseinheit und der zumindest einen zweiten Kommunikationseinheit über eine weitere logische Kommunikationsverbindung zumindest eine Sammel-Lebensnachricht übertragen wird, welche bezüglich mehrerer der zur Datenübertragung verwendeten logischen Kommunikationsverbindungen jeweils zumindest eine Information in Form einer Sequenznummer einer zuletzt über die jeweilige logische Kommunikationsverbindung (C1, C2, Cn) vorgenommenen Datenübertragung beinhaltet.

Gemäß dem ersten Schritt des erfindungsgemäßen Verfahrens zum Betreiben eines Kommunikationssystems mit einer ersten Kommunikationseinheit und zumindest einer zweiten Kommunikationseinheit werden somit zwischen der ersten Kommunikationseinheit und der zumindest einen zweiten Kommunikationseinheit zur Datenübertragung logische Kommunikationsverbindungen verwendet. Dies bedeutet, dass zwischen der ersten Kommunikationseinheit und der zumindest einen zweiten Kommunikationseinheit mehrere logische Kommunikationsverbindungen bestehen. Für den Fall mehrerer zweiter Kommunikationseinheiten kann dies insbesondere bedeuten, dass zwischen der ersten Kommunikationseinheit und jeder der zweiten Kommunikationseinheiten eine logische Kommunikationsverbindung verwendet wird. Durch den Begriff "logische Kommunikationsverbindung" wird hierbei zum Ausdruck gebracht, dass die physikalische oder protokolltechnische Realisierung der Kommunikationsverbindungen als solche beliebig ist.

Gemäß dem zweiten Schritt des erfindungsgemäßen Verfahrens wird zwischen der ersten Kommunikationseinheit und der zumindest einen zweiten Kommunikationseinheit über eine weitere logische Kommunikationsverbindung zumindest eine Sammel-Lebensnachricht übertragen. Dabei beinhaltet beziehungsweise enthält oder umfasst die Sammel-Lebensnachricht bezüglich mehrerer der zur Datenübertragung verwendeten logischen Kommunikationsverbindungen jeweils zumindest eine Information in Form einer Sequenznummer einer zuletzt über die jeweilige logische Kommunikationsverbindung (C1, C2, Cn) vorgenommenen Datenübertragung. Das erfindungsgemäße Verfahren zeichnet sich somit insbesondere dadurch aus, dass zur Übertragung von Lebensnachrichten eine separate, weitere logische Kommunikationsverbindung verwendet wird, die zusätzlich zu den logischen Kommunikationsverbindungen vorgesehen ist, die zur eigentlichen Datenübertragung, d.h. der Übertragung von Nutzdaten, verwendet werden. Bei der über die weitere logische Kommunikationsverbindung übertragenen Lebensnachricht handelt es sich dabei nicht um eine übliche, auf eine einzelne logische Kommunikationsverbindung bezogene Lebensnachricht, sondern um eine Sammel-Lebensnachricht. Diese beinhaltet bezüglich mehrerer der zur Datenübertragung verwendeten logischen Kommunikationsverbindungen jeweils zumindest eine Information. Durch die jeweilige Sequenznummer ist es empfangsseitig vorteilhafterweise möglich, in Bezug auf die jeweilige logische Kommunikationsverbindung zu überprüfen, ob alle vorhergehenden Datenübertragungen beziehungsweise Nachrichten empfangen wurden oder nicht.

Vorzugsweise handelt es sich bei den mehreren logischen Kommunikationsverbindungen hierbei um alle zwischen der ersten Kommunikationseinheit und der zumindest einen zweiten Kommunikationseinheit zur Datenübertragung verwendeten logischen Kommunikationsverbindungen. Darüber hinaus ist es jedoch zum Beispiel auch möglich, dass die zur Datenübertragung verwendeten logischen Kommunikationsverbindungen in Gruppen unterteilt werden, die jeweils mehrere logische Kommunikationsverbindungen umfassen, und jeweils für jede dieser Gruppen die zumindest eine Sammel-Lebensnachricht übertragen wird. Unabhängig von der jeweiligen Realisierung ersetzt die Sammel-Lebensnachricht funktional eine Mehrzahl einzelner Lebensnachrichten, d.h. dient bezogen auf die mehreren logischen Kommunikationsverbindungen als Lebensnachricht. Hierzu wird für eine Mehrzahl von logischen Kommunikationsverbindungen lediglich eine Sammel-Lebensnachricht generiert und versendet.

Die zumindest eine Sammel-Lebensnachricht wird vorzugsweise zyklisch übertragen. Dabei kann die Zyklusdauer, d.h. der jeweilige zeitliche Abstand zwischen zwei aufeinander folgenden Sammel-Lebensnachrichten, in Abhängigkeit von den jeweiligen Gegebenheiten und Anforderungen gewählt werden.

Bei der ersten Kommunikationseinheit und der zumindest einen zweiten Kommunikationseinheit kann es sich im Rahmen des erfindungsgemäßen Verfahrens um Entitäten, Geräte, Komponenten oder Einrichtungen beliebiger Art handeln. Dabei können die Kommunikationseinheiten in Abhängigkeit von der jeweiligen Realisierung und Anwendung entweder im Wesentlichen der Kommunikation dienen oder aber neben der Kommunikation weitere Funktionen beziehungsweise Aufgaben wahrnehmen beziehungsweise realisieren.

Das erfindungsgemäße Verfahren bietet den Vorteil, dass im erheblichen Umfang Ressourcen eingespart werden. Dies führt dazu, dass das erfindungsgemäße Kommunikationssystem auch bei einer Vielzahl von logischen Kommunikationsverbindungen, bezüglich derer eine Lebensnachricht-Überwachung erfolgt, seine Leistungsfähigkeit weitgehend erhält. Dies hat zur Folge, dass die Anzahl der an die erste Kommunikationseinheit ankoppelbaren zweiten Kommunikationseinheiten im Vergleich zu dem Fall des Übertragens von individuellen Lebensnachrichten für jede der logischen Kommunikationsverbindungen deutlich erhöht werden kann. So hat sich gezeigt, dass in Abhängigkeit von der jeweiligen Anwendung und den jeweiligen Randbedingungen der Versand und die Überwachung von Lebensnachrichten den höchsten Performancebedarf auf einem Rechner beziehungsweise einer Steuereinrichtung haben kann. Dieser Bedarf kann durch das erfindungsgemäße Verfahren deutlich reduziert werden. So konnte anhand des eingangs genannten Beispiels einer zentralen Steuereinrichtung eines Stellwerks, die über logische Kommunikationsverbindungen mit zweiten Kommunikationseinheiten in Form von dezentralen Steuereinrichtungen verbunden ist, gezeigt werden, dass der Performancebedarf im Zusammenhang mit Lebensnachrichten durch das erfindungsgemäße Verfahren in etwa halbiert werden kann. Dabei konnte in einer beispielhaften Ausführung für den Fall von über das Protokoll "RaSTA" (Rail Safe Transport Application) angebundenen dezentralen Steuereinrichtungen eine Sammel-Lebensnachricht für eine Vielzahl logischer Kommunikationsverbindungen in Form entsprechender RaSTA-Verbindungen verwendet werden.

Gemäß den vorstehenden Ausführungen kann durch das erfindungsgemäße Verfahren die Leistungsfähigkeit des Kommunikationssystems erheblich gesteigert werden. Darüber hinaus kann das erfindungsgemäße Verfahren vorteilhafterweise mit vergleichsweise geringem Aufwand und geringen Kosten realisiert werden.

Die Übertragung der zumindest einen Sammel-Lebensnachricht über die weitere logische Kommunikationsverbindung kann grundsätzlich auf beliebige, für sich bekannte Art und Weise, beispielsweise per Unicast, erfolgen.

Gemäß einer besonders bevorzugten Ausführungsform des erfindungsgemäßen Verfahrens wird die zumindest eine Sammel-Lebensnachricht mittels eines Publish-Subscribe-Mechanismus, per Multicast und/oder per Broadcast übertragen. Dies ist vorteilhaft, da es sich bei dem genannten Mechanismus beziehungsweise den genannten Übertragungsverfahren um bewährte Verfahren handelt, um eine Nachricht auf effiziente und ressourcenschonende Art und Weise zu übertragen. Dies gilt insbesondere für den Fall, dass die Sammel-Lebensnachricht von der ersten Kommunikationseinheit an mehrere zweite Kommunikationseinheiten übertragen wird.

Gemäß einer weiteren besonders bevorzugten Weiterbildung des erfindungsgemäßen Verfahrens wird die zumindest eine Sammel-Lebensnachricht an die zumindest eine zweite Kommunikationseinheit übertragen. Dies bietet den Vorteil, dass seitens der ersten Kommunikationseinheit bezogen auf die mehreren der zur Datenübertragung verwendeten logischen Kommunikationsverbindungen lediglich eine Sammel-Lebensnachricht generiert und an die zumindest eine zweite Kommunikationseinheit übertragen werden muss.

Alternativ oder zusätzlich zu der zuvor beschriebenen Ausführungsform kann das erfindungsgemäße Verfahren vorteilhafterweise auch derart weitergebildet sein, dass die zumindest eine Sammel-Lebensnachricht an die erste Kommunikationseinheit übertragen wird. In diesem Fall stammen die in der Sammel-Lebensnachricht beinhalteten Informationen somit von der zweiten Kommunikationseinheit beziehungsweise den zweiten Kommunikationseinheiten. Hierdurch besteht somit vorteilhafterweise die Möglichkeit, dass auch die zweiten Kommunikationseinheiten auf besonders leistungsfähige und effiziente Art und Weise Lebensnachrichten an die erste Kommunikationseinheit übermitteln. Im Falle mehrerer zweiter Kommunikationseinheiten kann die Sammel-Lebensnachricht hierbei von einer der zweiten Kommunikationseinheiten oder einer anderen Komponente des Kommunikationssystems gebildet beziehungsweise erzeugt werden.

Zur Vermeidung von Missverständnissen sei darauf hingewiesen, dass an die zumindest eine zweite Kommunikationseinheit übertragene Sammel-Lebensnachrichten und an die erste Kommunikationseinheit übertragene Sammel-Lebensnachrichten zwar in der Regel ähnlich oder gleich aufgebaut sein werden, d.h. jeweils bezüglich der beinhalteten Information gleich sein können, aber im Übrigen sich in Bezug auf die Übertragungsrichtung und potenziell auch in Bezug auf andere Eigenschaften unterscheiden beziehungsweise unterscheiden können.

Vorzugsweise kann das erfindungsgemäße Verfahren auch derart ausgestaltet sein, dass im Falle mehrerer zweiter Kommunikationseinheiten zwischen der ersten Kommunikationseinheit und jeder der zweiten Kommunikationseinheiten jeweils genau eine oder zumindest eine der logischen Kommunikationsverbindungen zur Datenübertragung verwendet wird. Dies ist vorteilhaft, da in diesem Fall mittels der Sammel-Lebensnachricht eine effiziente und leistungsfähige Überwachung der jeweils zumindest einen logischen Kommunikationsverbindung zwischen der ersten Kommunikationseinheit und den zweiten Kommunikationseinheiten ermöglicht wird.

Alternativ zu der zuvor beschriebenen Ausführungsform kann das erfindungsgemäße Verfahren vorteilhafterweise auch derart weitergebildet sein, dass im Falle einer einzelnen zweiten Kommunikationseinheit zwischen der ersten Kommunikationseinheit und der zweiten Kommunikationseinheit die mehreren logischen Kommunikationsverbindungen zur Datenübertragung verwendet werden. Gemäß dieser bevorzugten Ausführungsform bezieht sich die Sammel-Lebensnachricht somit auf die logischen Kommunikationsverbindungen zwischen der ersten Kommunikationseinheit und der einen zweiten Kommunikationseinheit. Auch in diesem Fall ergeben sich vorzugsweise die zuvor genannten Vorteile in Bezug auf Leistungsfähigkeit und Effizienz des Verfahrens.

Gemäß einer weiteren besonders bevorzugten Ausführungsform des erfindungsgemäßen Verfahrens sind die logischen Kommunikationsverbindungen dritten Kommunikationseinheiten zugeordnet und die zweite Kommunikationseinheit wird als Gateway zwischen der ersten Kommunikationseinheit und den dritten Kommunikationseinheiten verwendet. Dies bedeutet, dass die dritten Kommunikationseinheiten unter Zwischenschaltung des Gateways mit der ersten Kommunikationseinheit verbunden beziehungsweise verbindbar sind. Dabei kann die zweite Kommunikationseinheit in Form des Gateways beispielsweise eine an die erste Kommunikationseinheit zu übertragende Sammel-Lebensnachricht zusammenstellen beziehungsweise bilden.

Gemäß einer weiteren besonders bevorzugten Ausführungsform des erfindungsgemäßen Verfahrens wird von der zweiten Kommunikationseinheit eine Protokollumsetzung vorgenommen. Hierbei wird für die Kommunikation zwischen der ersten Kommunikationseinheit und der zweiten Kommunikationseinheit in Form des Gateways ein erstes Protokoll und für die Datenübertragung beziehungsweise Kommunikation zwischen dem Gateway und den dritten Kommunikationseinheiten ein zweites Protokoll verwendet. Mittels des Gateways wird somit vorteilhafterweise eine protokolltechnische Entkopplung der ersten Kommunikationseinheit und der dritten Kommunikationseinheiten erzielt.

Vorzugsweise kann das erfindungsgemäße Verfahren auch weiterhin derart ausgestaltet sein, dass die zumindest eine Sammel-Lebensnachricht empfangsseitig ausgewertet wird und die bezüglich der jeweiligen zur Datenübertragung verwendeten logischen Kommunikationsverbindung beinhaltete Information extrahiert wird. Dies ist vorteilhaft, da somit aus der Sammel-Lebensnachricht für jede der mehreren logischen Kommunikationsverbindungen die bezüglich dieser logischen Kommunikationsverbindungen beinhaltete Information extrahiert und gegebenenfalls weiter ausgewertet beziehungsweise verarbeitet wird. Dabei handelt es sich bei dem Extrahieren der jeweiligen Information um einen Schritt der empfangsseitigen Auswertung. Durch diese Auswertung kann somit in der Folge erkannt werden, ob bezüglich der betreffenden logischen Kommunikationsverbindungen weiterhin eine Funktionsfähigkeit beziehungsweise Reaktionsfähigkeit des jeweiligen Kommunikationspartners vorliegt.

Die zumindest eine Sammel-Lebensnachricht kann bezüglich der mehreren zur Datenübertragung verwendeten logischen Kommunikationsverbindungen beispielsweise jeweils zumindest eine Information in Form eines Zeitstempels einer zuletzt gesendeten Datennachricht und/oder eines Zeitstempels einer zuletzt empfangenen Datennachricht beinhalten.

Wie bereits erwähnt, ist das erfindungsgemäße Verfahren derart ausgebildet, dass die zumindest eine Sammel-Lebensnachricht bezüglich der mehreren zur Datenübertragung verwendeten logischen Kommunikationsverbindungen jeweils zumindest eine Information in Form einer Sequenznummer einer zuletzt über die jeweilige logische Kommunikationsverbindung vorgenommenen Datenübertragung beinhaltet. Durch die jeweilige Sequenznummer ist es empfangsseitig vorteilhafterweise möglich, in Bezug auf die jeweilige logische Kommunikationsverbindung zu überprüfen, ob alle vorhergehenden Datenübertragungen beziehungsweise Nachrichten empfangen wurden oder nicht.

Um eine entsprechende Überprüfung vornehmen zu können, ist es erforderlich, dass die in der Sammel-Lebensnachricht beinhalteten Sequenznummern der jeweiligen logischen Kommunikationsverbindung, auf die sie sich beziehen, zugeordnet werden können.

Hierzu kann das erfindungsgemäße Verfahren einerseits derart weitergebildet sein, dass die zumindest eine Sammel-Lebensnachricht zusätzlich für jede der Sequenznummern einen Verbindungsindikator enthält, mittels dessen die jeweilige der Sequenznummern der jeweiligen logischen Kommunikationsverbindung zugeordnet wird. Dies bedeutet, dass in diesem Fall anhand des jeweiligen Verbindungsindikators empfangsseitig ohne zusätzliche Informationen eine Zuordnung der jeweiligen Sequenznummer zur jeweiligen logischen Kommunikationsverbindung vorgenommen werden kann. Dies bietet den Vorteil, dass keine entsprechenden zusätzlichen Informationen vorgesehen und verwaltet werden müssen.

Alternativ zu der zuvor beschriebenen Ausführungsform kann das erfindungsgemäße Verfahren vorteilhafterweise auch derart ausgeprägt sein, dass empfangsseitig unter Einbeziehung von Konfigurationsdaten eine Zuordnung der jeweiligen der Sequenznummern zu der jeweiligen logischen Kommunikationsverbindung vorgenommen wird. In diesem Fall ist es vorteilhafterweise nicht erforderlich, für jede der Sequenznummern in der zumindest einen Sammel-Lebensnachricht einen Verbindungsindikator anzugeben. Um eine Zuordnung der jeweiligen der Sequenznummern zu der jeweiligen logischen Kommunikationsverbindung vorzunehmen, werden stattdessen empfangsseitig Konfigurationsdaten einbezogen. Diese Konfigurationsdaten geben somit unmittelbar oder mittelbar an, welche Sequenznummer sich auf welche logische Kommunikationsverbindung bezieht.

Hinsichtlich des Kommunikationssystems liegt der vorliegenden Erfindung die Aufgabe zugrunde, ein Kommunikationssystem anzugeben, das ein besonders leistungsfähiges und zugleich vergleichsweise aufwandsarm zu realisierbares Verfahren zum Betreiben des Kommunikationssystems unterstützt.

Diese Aufgabe wird erfindungsgemäß gelöst durch ein Kommunikationssystem mit einer ersten Kommunikationseinheit und zumindest einer zweiten Kommunikationseinheit, wobei zwischen der ersten Kommunikationseinheit und der zumindest einen zweiten Kommunikationseinheit zur Datenübertragung mehrere logische Kommunikationsverbindungen vorgesehen sind, zwischen der ersten Kommunikationseinheit und der zumindest einen zweiten Kommunikationseinheit eine weitere logische Kommunikationsverbindung vorgesehen ist und das Kommunikationssystem eingerichtet ist, über die weitere logische Kommunikationsverbindung zumindest eine Sammel-Lebensnachricht zu übertragen, welche bezüglich mehrerer der zur Datenübertragung verwendeten logischen Kommunikationsverbindungen jeweils zumindest eine Information in Form einer Sequenznummer einer zuletzt über die jeweilige logische Kommunikationsverbindung (C1, C2, Cn) vorgenommenen Datenübertragung beinhaltet.

Die Vorteile des erfindungsgemäßen Kommunikationssystems entsprechen demjenigen des erfindungsgemäßen Verfahrens, so dass diesbezüglich auf die entsprechenden vorstehenden Ausführungen verwiesen wird.

Gemäß einer besonders bevorzugten Weiterbildung des erfindungsgemäßen Kommunikationssystems ist die erste Kommunikationseinheit eine zentrale Steuereinrichtung eines Stellwerks und die zumindest eine zweite Kommunikationseinheit eine dezentrale Steuereinrichtung des Stellwerks. Dies ist vorteilhaft, da im Rahmen der zunehmenden Digitalisierung immer häufiger die Notwendigkeit besteht, eine Mehrzahl oder Vielzahl von dezentralen Steuereinrichtungen von Stellwerken an eine jeweilige zentrale Steuereinrichtung des Stellwerks kommunikationstechnisch anzubinden. Dabei erfolgt die Kommunikation üblicherweise mittels gängiger Kommunikationsverfahren wie beispielsweise TCP/IP. Durch das erfindungsgemäße Kommunikationssystem wird es hierbei ermöglicht, dass die Anzahl der zu generierenden Lebensnachrichten beziehungsweise Lebenstakte durch die Verwendung der Sammel-Lebensnachricht erheblich reduziert werden kann. Hierdurch wird die Leistungsfähigkeit des Stellwerks erhöht beziehungsweise die erforderliche Leistung kann mit geringeren Hardwaremitteln erzielt werden, wodurch sich das Gesamtsystem vereinfacht und Kosten reduziert werden.

Vorzugsweise kann das erfindungsgemäße Kommunikationssystem auch derart weitergebildet sein, dass das Kommunikationssystem zum Durchführen des Verfahrens gemäß einer der zuvor beschriebenen bevorzugten Weiterbildungen des erfindungsgemäßen Verfahrens eingerichtet ist. Auch hinsichtlich der Vorteile dieser bevorzugten Weiterbildung des erfindungsgemäßen Kommunikationssystems sei auf die entsprechenden Ausführungen im Zusammenhang mit der jeweiligen bevorzugten Ausführungsform des erfindungsgemäßen Verfahrens verwiesen.

Im Folgenden wird die Erfindung anhand von Ausführungsbeispielen näher erläutert. Hierzu zeigt
- Figur 1: in einer schematischen Skizze zur Erläuterung eines ersten Ausführungsbeispiels des erfindungsgemäßen Verfahrens ein erstes Ausführungsbespiel des erfindungsgemäßen Kommunikationssystems und
- Figur 2: in einer schematischen Skizze zur Erläuterung eines zweiten Ausführungsbeispiels des erfindungsgemäßen Verfahrens ein zweites Ausführungsbeispiel des erfindungsgemäßen Kommunikationssystems.

In den Figuren werden aus Gründen der Übersichtlichkeit für gleiche Komponenten die gleichen Bezugszeichen verwendet.

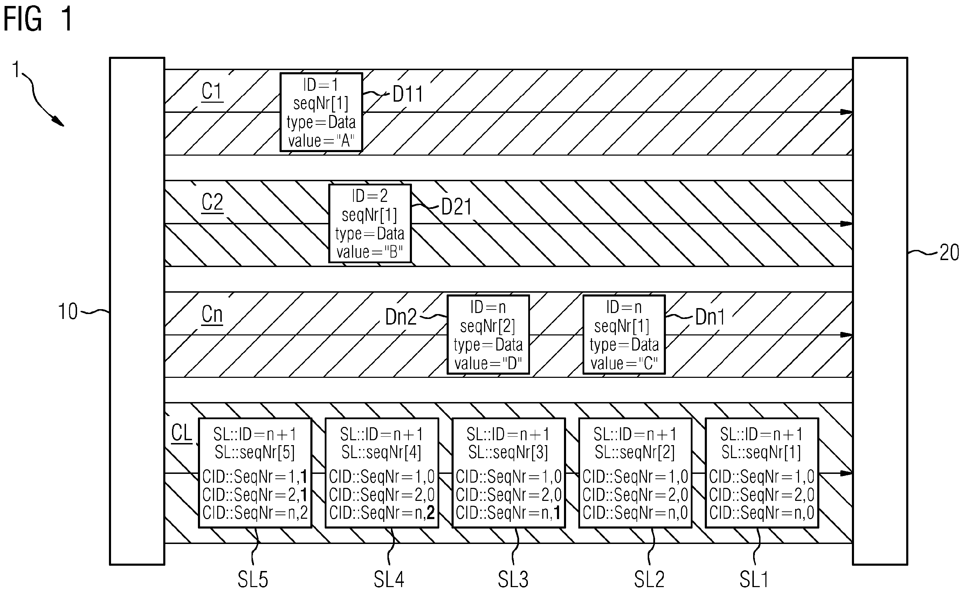

Figur 1 zeigt in einer schematischen Skizze zur Erläuterung eines ersten Ausführungsbeispiels des erfindungsgemäßen Verfahrens ein erstes Ausführungsbespiel des erfindungsgemäßen Kommunikationssystems. Dabei sind in Form eines Sequenzdiagramms eine erste Kommunikationseinheit 10 sowie eine zweite Kommunikationseinheit 20 angedeutet, zwischen denen logische Kommunikationsverbindungen C1, C2 und Cn bestehen. Dabei wird durch die Bezeichnung "Cn" angedeutet, dass es sich - abweichend von der Darstellung der Figur 1 - um eine beliebige Anzahl n von logischen Kommunikationsverbindungen C1, C2, Cn handeln kann.

Die logischen Kommunikationsverbindungen C1, C2, Cn in der Figur 1 schraffiert dargestellt. Dies dient der besseren Erkennbarkeit und Unterscheidung, soll jedoch keine physische oder physikalische Gestalt oder Ausprägung der logischen Kommunikationsverbindungen C1, C2, Cn andeuten.

Die logischen Kommunikationsverbindungen C1, C2, Cn werden zwischen der ersten Kommunikationseinheit 10 und der zweiten Kommunikationseinheit 20 zur Datenübertragung verwendet. Dies ist in der Figur 1 durch entsprechende Datennachrichten beziehungsweise Datenpakete D11, D21, Dn1 und Dn2 angedeutet.

Dabei wird durch die Bezeichnung "Dnm" der Datennachricht zum Ausdruck gebracht, dass es sich um die m-te Datennachricht beziehungsweise Datenübertragung über die n-te logische Kommunikationsverbindung C1, C2, Cn handelt.

Im Rahmen des beschriebenen Ausführungsbeispiels sei angenommen, dass die betreffenden Datennachrichten D11, D21, Dn1, Dn2 von der ersten Kommunikationseinheit 10 an die zweite Kommunikationseinheit 20 übertragen werden. Durch die entsprechende horizontale Anordnung der Datennachrichten D11, D21, Dn1, Dn2 wird dabei die zeitliche Abfolge der Übertragung angedeutet. Dies bedeutet, dass in zeitlicher Abfolge zunächst über die logische Kommunikationsverbindung Cn die Datennachrichten Dn1 und Dn2 und anschließend über die logische Kommunikationsverbindung C2 die Datennachricht D21 übertragen wird. Als letztes folgt dann die Übertragung der Datennachricht D11 über die logische Kommunikationsverbindung C1.

Die Datennachrichten D11, D21, Dn1, Dn2 enthalten jeweils eine Identität "ID", deren Wert die jeweilige logische Kommunikationsverbindung C1, C2, Cn kennzeichnet. Darüber hinaus ist eine Sequenznummer "seqNr" vorgesehen, welche identifiziert, um die wievielte Datennachricht D11, D21, Dn1, Dn2 über die jeweilige logische Kommunikationsverbindung C1, C2, Cn es sich jeweils handelt (beziehungsweise allgemein die über die jeweilige logische Kommunikationsverbindung übertragenen Datennachrichten unterscheidbar macht). Zur Identifizierung des Nachrichtentyps, d.h. zur Kennzeichnung der Datennachrichten D11, D21, Dn1, Dn2 als solche zur Übertragung von Nutzdaten, ist in den Datennachrichten D11, D21, Dn1, Dn2 jeweils "type=Data" angegeben. Der eigentliche Dateninhalt, d.h. die jeweils übertragenen Nutzdaten, sind in den Datennachrichten D11, D21, Dn1, Dn2 durch eine Angabe der Art "value="A"" angegeben. Dabei steht der jeweilige Inhalt "A", "B", "C" beziehungsweise "D" für einen jeweiligen Dateninhalt beliebiger Art. So können die Datennachrichten D11, D21, Dn1, Dn2 grundsätzlich insbesondere eine beliebige Länge sowie einen belieben Inhalt aufweisen.

In dem Ausführungsbeispiel der Figur 1 ist erkennbar, dass zwischen der Übertragung der Datennachrichten D11, D21, Dn1, Dn2 gegebenenfalls längere Zeit keine Datennachrichten übertragen werden. Dies bedeutet, dass der zweiten Kommunikationseinheit 20 bezogen auf die jeweilige logische Kommunikationsverbindung C1, C2, Cn gegebenenfalls über eine entsprechend lange Zeit keine Information dazu vorliegt, ob die erste Kommunikationseinheit 10 weiterhin reaktionsfähig und die jeweilige logische Kommunikationsverbindung C1, C2, Cn verfügbar ist.

In dieser Situation würden von der ersten Kommunikationseinheit 10 nun bei einer üblichen Vorgehensweise in Bezug auf eine überwachte Verbindung zyklisch beziehungsweise in regelmäßigen zeitlichen Abständen Lebensnachrichten an die zweite Kommunikationseinheit 20 übertragen werden. In dem Ausführungsbeispiel gemäß Figur 1 könnte dies beispielsweise so aussehen, dass über die logische Kommunikationsverbindung C1 vor der Datennachricht D11 drei entsprechende Lebensnachrichten beziehungsweise Lebenstakte übertragen werden und nach der Datennachricht D11 eine weitere entsprechende Lebensnachricht. In entsprechender Weise könnten beispielsweise auch bezogen auf die zweite logische Kommunikationsverbindung C2 vor der Datennachricht D21 drei Lebensnachrichten übertragen werden und eine weitere nach der Übertragung der Datennachricht D21. Einen ähnlichen oder gleichen Zyklus vorausgesetzt, könnte im Falle der logischen Kommunikationsverbindung Cn beispielsweise eine Lebensnachricht vor den beiden Datennachrichten Dn1 und Dn2 und zwei weitere entsprechende Lebensnachrichten nach diesen übertragen werden. Wenn man nun bedenkt, dass die Zahl n, d.h. die Anzahl der logischen Kommunikationsverbindungen zwischen der ersten Kommunikationseinheit und der zweiten Kommunikationseinheit 20, häufig deutlich größer als 3 sein wird, so wird deutlich, dass bei der beschriebenen Vorgehensweise seitens der ersten Kommunikationseinheit 10 ein erheblicher Aufwand dafür betrieben werden müsste, für jede der logischen Kommunikationsverbindungen C1, C2, Cn entsprechende Lebensnachrichten zu generieren und zu versenden. In ähnlicher Weise gilt dies auch in Bezug auf die zweite Kommunikationseinheit 20 hinsichtlich des Empfangs und des Auswertens dieser Lebensnachrichten. Dies kann somit erhebliche Einschränkungen der Leistungsfähigkeit des Kommunikationssystems 1 zur Folge haben.

Um entsprechende Einschränkungen zu vermeiden beziehungsweise die Leistungsfähigkeit des Kommunikationssystems 1 entsprechend zu erhöhen, wird bei dem Ausführungsbeispiel des erfindungsgemäßen Kommunikationssystems 1 gemäß Figur 1 auf entsprechende individuelle, über die jeweilige logische Kommunikationsverbindung C1, C2, Cn zwischen der ersten Kommunikationseinheit 10 und der zweiten Kommunikationseinheit 20 übertragene Lebensnachrichten verzichtet. Stattdessen werden zwischen der ersten Kommunikationseinheit 10 und der zweiten Kommunikationseinheit 20 über eine weitere logische Kommunikationsverbindung CL Sammel-Lebensnachrichten SL1, SL2, SL3, SL4 und SL5 übertragen. Diese enthalten gemäß dem Ausführungsbeispiel der Figur 1 zunächst eine Information "SL::ID", deren Wert angibt, dass es sich hierbei um die weitere logische Kommunikationsverbindung mit der ID n+1 handelt. Mittels eines weiteren Parameters "SL::seqNr" enthalten die Sammel-Lebensnachrichten SL1, SL2, SL3, SL4, SL5 jeweils eine Sequenznummer, welche die Abfolge der Sammel-Lebensnachrichten SL1, SL2, SL3, SL4 und SL5 angibt. Darüber hinaus beinhalten die Sammel-Lebensnachrichten SL1, SL2, SL3, SL4, SL5 bezüglich der zur Datenübertragung verwendeten logischen Kommunikationsverbindungen C1, C2, Cn jeweils zumindest eine Information. Hierzu ist hinter der Angabe "CID::SeqNr" jeweils zunächst ein Verbindungsindikator "CID" in Form einer ID der jeweiligen logischen Kommunikationsverbindung angegeben. Mittels dieses Verbindungsindikators "CID" ist somit eine Zuordnung zu der jeweiligen logischen Kommunikationsverbindung C1, C2, Cn möglich. Durch ein Komma abgetrennt folgt sodann eine Sequenznummer "SeqNr" einer zuletzt über die jeweilige logische Kommunikationsverbindung C1, C2, Cn vorgenommenen Datenübertragung. In Bezug auf die Sammel-Lebensnachricht SL1, SL2, SL3, SL4, SL5 bedeutet dies konkret, dass sich die erste Sequenznummer auf die erste logische Kommunikationsverbindung C1 bezieht, die zweite Sequenznummer auf die zweite logische Kommunikationsverbindung C2 und die dritte (beziehungsweise allgemein n-te) Sequenznummer auf die logische Kommunikationsverbindung Cn.

Nachdem in der in Figur 1 dargestellten Situation zum Zeitpunkt der Übertragung der Sammel-Lebensnachricht SL1 noch keine Datennachrichten D11, D21, Dn1, Dn2 übertragen worden sind, weisen die entsprechenden Sequenznummern in der Sammel-Lebensnachricht SL1 jeweils den Wert 0 auf.

Sofern man nun beispielsweise die fünfte dargestellte Sammel-Lebensnachricht SL5 betrachtet, so wird deutlich, dass sich die Sequenznummer für jede der logischen Kommunikationsverbindungen C1, C2, Cn erhöht hat. So wurde zwischenzeitlich über die erste logische Kommunikationsverbindung C1 die Datennachricht D11 übertragen und über die zweite logische Kommunikationsverbindung C2 die Datennachricht D21. Dementsprechend weisen die Sequenznummern für die betreffenden logischen Kommunikationsverbindungen C1, C2 in der Sammel-Lebensnachricht SL5 jeweils den Wert 1 auf. Bezüglich der logischen Kommunikationsverbindung Cn ist erkennbar, dass zum Zeitpunkt der Übertragung der Sammel-Lebensnachricht SL5 bereits zwei Datennachrichten Dn1, Dn2 übertragen worden sind. Dementsprechend weist die entsprechende Sequenznummer in der Sammel-Lebensnachricht SL5 den Wert 2 auf.

Die Übertragung der Sammel-Lebensnachrichten SL1, SL2, SL3, SL4, SL5 von der ersten Übertragungseinheit 10 an die zweite Übertragungseinheit 20 kann als solche gemäß einem beliebigen geeigneten Kommunikationsverfahren erfolgen, d.h. beispielsweise mittels eines Publish-Subscribe-Mechanismus, per Multicast und/oder per Broadcast. Dabei sind die entsprechenden Übertragungsverfahren insbesondere in solchen Situationen zweckmäßig, in denen abweichend von der vereinfachten Darstellung der Figur 1 mehrere zweite Kommunikationseinheiten 20 vorhanden sind, an welche die Sammel-Lebensnachrichten SL1, SL2, SL3, SL4, SL5 zu übertragen sind.

Zusätzlich oder alternativ zu dem in Figur 1 dargestellten Ausführungsbeispiel wäre es auch möglich, dass Sammel-Lebensnachrichten von der zweiten Kommunikationseinheit 20 an die erste Kommunikationseinheit 10 übertragen werden. Dies könnte entweder ebenfalls über die weitere logische Kommunikationsverbindung CL oder auch über eine zusätzliche weitere logische Kommunikationsverbindung geschehen.

Für den Fall, dass das Kommunikationssystem 1 mehrere zweite Kommunikationseinheiten 20 umfasst, kann die Datenübertragung zwischen der ersten Kommunikationseinheit 10 und diesen zweiten Kommunikationseinheiten jeweils genau eine oder jeweils zumindest eine der logischen Kommunikationsverbindungen C1, C2, Cn zur Datenübertragung verwenden.

In dem in Figur 1 dargestellten Fall einer einzelnen zweiten Kommunikationseinheit 20 werden zwischen der ersten Kommunikationseinheit und der zweiten Kommunikationseinheit die logischen Kommunikationsverbindungen C1, C2, Cn zur Datenübertragung verwendet. Dabei besteht die Möglichkeit, dass die logischen Kommunikationsverbindungen C1, C2, Cn in Figur 1 aus Gründen der Übersichtlichkeit nicht dargestellten dritten Kommunikationseinheiten zugeordnet sind, so dass die über die jeweilige logische Kommunikationsverbindung C1, C2, Cn übertragenen Datennachrichten D11, D21, Dn1, Dn2 letztlich für die jeweilige dritte Kommunikationseinheit bestimmt sind. In diesem Fall fungiert die zweite Kommunikationseinheit 20 somit als Gateway zwischen der ersten Kommunikationseinheit 10 und den dritten Kommunikationseinheiten. Dabei kann seitens des Gateways in Form der zweiten Kommunikationseinheit 20 insbesondere eine Protokollumsetzung vorgenommen werden. Dies bedeutet, dass die Datenübertragung zwischen der ersten Kommunikationseinheit 10 und der zweiten Kommunikationseinheit 20 gemäß einem ersten Kommunikationsprotokoll erfolgt und die Datenübertragung zwischen der zweiten Kommunikationseinheit 20 und den dritten Kommunikationseinheiten gemäß einem zweiten Kommunikationsprotokoll. Für den Fall, dass das Kommunikationssystem 1 ein Kommunikationssystem eines Stellwerks darstellt und es sich bei der ersten Kommunikationseinheit 10 um eine zentrale Steuereinrichtung des Stellwerks handelt, könnte es sich hierbei bei den dritten Kommunikationseinheiten beispielsweise um dezentrale Steuerungseinrichtungen des Stellwerks handeln, die beispielsweise über das RaSTA-Protokoll an die zweite Kommunikationseinheit 20 in Form des Gateways angebunden sein können.

Unabhängig von der jeweiligen Realisierung können die Sammel-Lebensnachrichten SL1, SL2, SL3, SL4, SL5 empfangsseitig, d.h. von der zweiten Kommunikationseinheit 20, ausgewertet werden. Im Rahmen dieser Auswertung kann insbesondere die bezüglich der jeweiligen zur Datenübertragung verwendeten logischen Kommunikationsverbindung C1, C2, Cn beinhaltete Information, d.h. vorliegend die jeweilige Sequenznummer, extrahiert werden. Hierdurch wird es der zweiten Kommunikationseinheit 20 ermöglicht, zu überprüfen, dass sie tatsächlich alle von der ersten Kommunikationseinheit 10 abgesandten Datennachrichten D11, D21, Dn1, Dn2 empfangen hat. Für eine entsprechende Überprüfung ist es hierbei erforderlich, dass die Sequenznummern der jeweiligen logischen Kommunikationsverbindung C1, C2, Cn zugeordnet werden können. Wie bereits zuvor beschrieben, geschieht dies in dem Ausführungsbeispiel dadurch, dass die Sammel-Lebensnachrichten SL1, SL2, SL3, SL4, SL5 jeweils einen Verbindungsindikator "CID" enthalten, mittels dessen die jeweilige Sequenznummer der jeweiligen logischen Kommunikationsverbindung C1, C2, Cn zugeordnet werden kann. Dabei erfolgt die Übertragung der Sequenznummern sowie der Verbindungsindikatoren in den Sammel-Lebensnachrichten SL1, SL2, SL3, SL4, SL5 als Payload in der jeweiligen Datennachricht D11, D21, Dn1, Dn2, d.h. dem jeweiligen Telegramm. Zur Vermeidung von Missverständnissen sei an dieser Stelle betont, dass das Ausführungsbeispiel gemäß Figur 1 lediglich exemplarisch einen kleinen zeitlichen Ausschnitt skizziert. Dies bedeutet insbesondere, dass entsprechende Sammel-Lebensnachrichten SL1, SL2, SL3, SL4, SL5 in der Regel zyklisch verschickt werden.

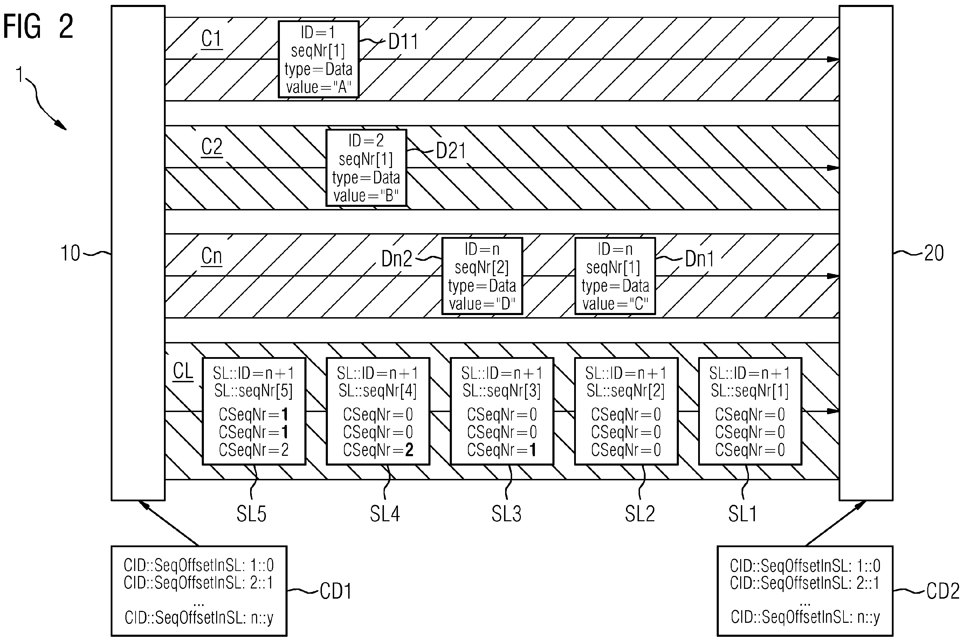

Figur 2 zeigt in einer schematischen Skizze zur Erläuterung eines zweiten Ausführungsbeispiels des erfindungsgemäßen Verfahrens ein zweites Ausführungsbeispiel des erfindungsgemäßen Kommunikationssystems. Dabei entspricht die Darstellung der Figur 2 weitgehend derjenigen der Figur 1. Im Unterschied zu Figur 1 weisen die Sammel-Lebensnachrichten SL1, SL2, SL3, SL4, SL5 jedoch keine Verbindungsindikatoren auf. Dies bedeutet, dass den Sammel-Lebensnachrichten SL1, SL2, SL3, SL4, SL5 als solchen zunächst nicht angesehen werden kann, auf welche logische Kommunikationsverbindung C1, C2, Cn sich die jeweilige Sequenznummer "CSeqNr" bezieht. Um nun dennoch eine entsprechende Auswertung vornehmen zu können, verfügen die erste Kommunikationseinheit 10 sowie die zweite Kommunikationseinheit 20 bei dem Ausführungsbeispiel gemäß Figur 2 jeweils über Konfigurationsdateien CD1, CD2, welche festlegen, in welcher Reihenfolge die Sequenznummern "CSeqNr" angeordnet beziehungsweise übertragen werden. Dies geschieht dadurch, dass in den Konfigurationsdateien CD1, CD2 für jede logische Kommunikationsverbindung C1, C2, Cn, dargestellt durch eine jeweilige Verbindungs-ID "CID", der Offset "SeqOffsetInSL" für die jeweilige Sequenznummer "CSeqNr" angegeben wird. In dem dargestellten Ausführungsbeispiel bedeutet dies, dass die Sequenznummer "CSeqNr" für die erste logische Kommunikationsverbindung C1 unmittelbar, ohne Offset in dem entsprechenden Teil der Sammel-Lebensnachrichten SL1, SL2, SL3, SL4, SL5 enthalten ist ("CID::SeqOffsetInSL: 1::0"). Bezüglich der zweiten logischen Kommunikationsverbindung C2 beträgt der entsprechende Offset 1 und so weiter.

Gemäß den vorstehenden Ausführungen im Zusammenhang mit den beschriebenen Ausführungsbeispielen des erfindungsgemäßen Kommunikationssystems 1 sowie des erfindungsgemäßen Verfahrens zeichnen sich diese insbesondere dadurch aus, dass Lebensnachrichten beziehungsweise Zustandsinformationen für eine Mehrzahl von logischen Kommunikationsverbindungen C1, C2, Cn mittels Sammel-Lebensnachrichten SL1, SL2, SL3, SL4, SL5 über eine weitere logische Kommunikationsverbindung CL übertragen werden. In Abhängigkeit von den jeweiligen Gegebenheiten und Anforderungen können sich hieraus erhebliche Vorteile in Bezug auf die Leistungsfähigkeit des Kommunikationssystems 1 ergeben, wobei gleichzeitig zusätzliche Aufwände, insbesondere für zusätzliche Hardware, vorteilhafterweise vermieden werden.

## Patentansprüche

1. Verfahren zum Betreiben eines Kommunikationssystems (1) mit einer ersten Kommunikationseinheit (10) und zumindest einer zweiten Kommunikationseinheit (20), wobei
- zwischen der ersten Kommunikationseinheit (10) und der zumindest einen zweiten Kommunikationseinheit (20) zur Datenübertragung logische Kommunikationsverbindungen (C1, C2, Cn) verwendet werden und
- zwischen der ersten Kommunikationseinheit (10) und der zumindest einen zweiten Kommunikationseinheit (20) über eine weitere logische Kommunikationsverbindung (CL) zumindest eine Sammel-Lebensnachricht (SL1, SL2, SL3, SL4, SL5) übertragen wird, welche bezüglich mehrerer der zur Datenübertragung verwendeten logischen Kommunikationsverbindungen (C1, C2, Cn) jeweils zumindest eine Information in Form einer Sequenznummer einer zuletzt über die jeweilige logische Kommunikationsverbindung (C1, C2, Cn) vorgenommenen Datenübertragung beinhaltet.

2. Verfahren nach Anspruch 1,
wobei
die zumindest eine Sammel-Lebensnachricht (SL1, SL2, SL3, SL4, SL5) mittels eines Publish-Subscribe-Mechanismus, per Multicast und/oder per Broadcast übertragen wird.

3. Verfahren nach Anspruch 1 oder 2,
wobei
die zumindest eine Sammel-Lebensnachricht (SL1, SL2, SL3, SL4, SL5) an die zumindest eine zweite Kommunikationseinheit (20) übertragen wird.

4. Verfahren nach einem der vorangehenden Ansprüche,
wobei
die zumindest eine Sammel-Lebensnachricht (SL1, SL2, SL3, SL4, SL5) an die erste Kommunikationseinheit (10) übertragen wird.

5. Verfahren nach einem der vorangehenden Ansprüche,
wobei
im Falle mehrerer zweiter Kommunikationseinheiten (20) zwischen der ersten Kommunikationseinheit (10) und jeder der zweiten Kommunikationseinheiten (20) jeweils genau eine oder zumindest eine der logischen Kommunikationsverbindungen (C1, C2, Cn) zur Datenübertragung verwendet wird.

6. Verfahren nach einem der Ansprüche 1 bis 4,
wobei
im Falle einer einzelnen zweiten Kommunikationseinheit (20) zwischen der ersten Kommunikationseinheit (10) und der zweiten Kommunikationseinheit (20) die mehreren logischen Kommunikationsverbindungen (C1, C2, Cn) zur Datenübertragung verwendet werden.

7. Verfahren nach Anspruch 6,
wobei
die logischen Kommunikationsverbindungen (C1, C2, Cn) dritten Kommunikationseinheiten zugeordnet sind und die zweite Kommunikationseinheit (20) als Gateway zwischen der ersten Kommunikationseinheit (10) und den dritten Kommunikationseinheiten verwendet wird.

8. Verfahren nach Anspruch 7,
wobei
von der zweiten Kommunikationseinheit (20) eine Protokollumsetzung vorgenommen wird.

9. Verfahren nach einem der vorangehenden Ansprüche,
wobei
die zumindest eine Sammel-Lebensnachricht (SL1, SL2, SL3, SL4, SL5) empfangsseitig ausgewertet wird und die bezüglich der jeweiligen zur Datenübertragung verwendeten logischen Kommunikationsverbindung (C1, C2, Cn) beinhaltete Information extrahiert wird.

10. Verfahren nach Anspruch 9,
wobei
die zumindest eine Sammel-Lebensnachricht (SL1, SL2, SL3, SL4, SL5) zusätzlich für jede der Sequenznummern einen Verbindungsindikator enthält, mittels dessen die jeweilige der Sequenznummern der jeweiligen logischen Kommunikationsverbindung (C1, C2, Cn) zugeordnet wird.

11. Verfahren nach Anspruch 9,
wobei
empfangsseitig unter Einbeziehung von Konfigurationsdaten (CD1, CD2) eine Zuordnung der jeweiligen der Sequenznummern zu der jeweiligen logischen Kommunikationsverbindung (C1, C2, Cn) vorgenommen wird.

12. Kommunikationssystem (1) mit einer ersten Kommunikationseinheit (10) und zumindest einer zweiten Kommunikationseinheit (20), wobei
- zwischen der ersten Kommunikationseinheit (10) und der zumindest einen zweiten Kommunikationseinheit (20) zur Datenübertragung mehrere logische Kommunikationsverbindungen (C1, C2, Cn) vorgesehen sind,
- zwischen der ersten Kommunikationseinheit (10) und der zumindest einen zweiten Kommunikationseinheit (20) eine weitere logische Kommunikationsverbindung (CL) vorgesehen ist und
- das Kommunikationssystem (1) eingerichtet ist, über die weitere logische Kommunikationsverbindung (CL) zumindest eine Sammel-Lebensnachricht (SL1, SL2, SL3, SL4, SL5) zu übertragen, welche bezüglich mehrerer der zur Datenübertragung verwendeten logischen Kommunikationsverbindungen (C1, C2, Cn) jeweils zumindest eine Information in Form einer Sequenznummer einer zuletzt über die jeweilige logische Kommunikationsverbindung (C1, C2, Cn) vorgenommenen Datenübertragung beinhaltet.

13. Kommunikationssystem (1) nach Anspruch 12,
wobei
die erste Kommunikationseinheit (10) eine zentrale Steuereinrichtung eines Stellwerks ist und die zumindest eine zweite Kommunikationseinheit (20) eine dezentrale Steuereinrichtung des Stellwerks.

14. Kommunikationssystem (1) nach Anspruch 12 oder 13,
wobei
das Kommunikationssystem (1) zum Durchführen des Verfahrens nach einem der Ansprüche 2 bis 12 eingerichtet ist.

## Claims

1. Method for operating a communication system (1) containing a first communication unit (10) and at least one second communication unit (20), wherein
- logic communication connections (C1, C2, Cn) are used for data transmission between the first communication unit (10) and the at least one second communication unit (20) and
- at least one joint keep-alive message (SL1, SL2, SL3, SL4, SL5) is transmitted via a further logic communication connection (CL) between the first communication unit (10) and the at least one second communication unit (20), which joint keep-alive message contains, with regard to a plurality of the logic communication connections (C1, C2, Cn) used for data transmission, in each case at least one item of information in the form of a sequence number of a data transmission last performed via the respective logic communication connection (C1, C2, Cn).

2. Method according to Claim 1,
wherein
the at least one joint keep-alive message (SL1, SL2, SL3, SL4, SL5) is transmitted by way of a publish-subscribe mechanism, via multicast and/or via broadcast.

3. Method according to Claim 1 or 2,
wherein
the at least one joint keep-alive message (SL1, SL2, SL3, SL4, SL5) is transmitted to the at least one second communication unit (20).

4. Method according to one of the preceding claims,
wherein
the at least one joint keep-alive message (SL1, SL2, SL3, SL4, SL5) is transmitted to the first communication unit (10).

5. Method according to one of the preceding claims,
wherein,
in the case of a plurality of second communication units (20), in each case precisely one or at least one of the logic communication connections (C1, C2, Cn) is used for data transmission between the first communication unit (10) and each of the second communication units (20).

6. Method according to one of Claims 1 to 4,
wherein,
in the case of a single second communication unit (20), the plurality of logic communication connections (C1, C2, Cn) are used for data transmission between the first communication unit (10) and the second communication unit (20).

7. Method according to Claim 6,
wherein
the logic communication connections (C1, C2, Cn) are assigned to third communication units and the second communication unit (20) is used as a gateway between the first communication unit (10) and the third communication units.

8. Method according to Claim 7,
wherein
a protocol conversion is performed by the second communication unit (20).

9. Method according to one of the preceding claims,
wherein
the at least one joint keep-alive message (SL1, SL2, SL3, SL4, SL5) is evaluated at the receiver side and the contained information relating to the respective logic communication connection (C1, C2, Cn) used for data transmission is extracted.

10. Method according to Claim 9,
wherein
the at least one joint keep-alive message (SL1, SL2, SL3, SL4, SL5) additionally contains, for each of the sequence numbers, a connection indicator by way of which the respective one of the sequence numbers is assigned to the respective logic communication connection (C1, C2, Cn).

11. Method according to Claim 9,
wherein
the respective one of the sequence numbers is assigned to the respective logic communication connection (C1, C2, Cn) on the receiver side with the incorporation of configuration data (CD1, CD2).

12. Communication system (1) containing a first communication unit (10) and at least one second communication unit (20), wherein
- a plurality of logic communication connections (C1, C2, Cn) are provided for data transmission between the first communication unit (10) and the at least one second communication unit (20),
- a further logic communication connection (CL) is provided between the first communication unit (10) and the at least one second communication unit (20) and
- the communication system (1) is configured so as to transmit at least one joint keep-alive message (SL1, SL2, SL3, SL4, SL5) via the further logic communication connection (CL), which joint keep-alive message contains, with regard to a plurality of the logic communication connections (C1, C2, Cn) used for data transmission, in each case at least one item of information in the form of a sequence number of a data transmission last performed via the respective logic communication connection (C1, C2, Cn).

13. Communication system (1) according to Claim 12,
wherein
the first communication unit (10) is a central controller of a signal box and the at least one second communication unit (20) is a decentralized controller of the signal box.

14. Communication system (1) according to Claim 12 or 13,
wherein
the communication system (1) is configured so as to perform the method according to one of Claims 2 to 12.

## Revendications

1. Procédé pour faire fonctionner un système (1) de communication comprenant une première unité (10) de communication et au moins une deuxième unité (20) de communication, dans lequel
- on utilise des liaisons (C1, C2, Cn) de communication logiques pour la transmission de données entre la première unité (10) de communication et la au moins une deuxième unité (20) de communication et
- on transmet entre la première unité (10) de communication et la au moins une deuxième unité (20) de communication, par l'intermédiaire d'une autre liaison (CL) de communication logique, au moins un message (SL1, SL2, SL3, SL4, SL5) de vie collectif, qui, en ce qui concerne plusieurs des liaisons (C1, C2, Cn) de communication logiques utilisées pour la transmission de données, contient respectivement au moins une information sous la forme d'un numéro de séquence d'une transmission de données effectuée en dernier par l'intermédiaire de la liaison (C1, C2, Cn) de communication logique respective.

2. Procédé suivant la revendication 1,
dans lequel
on transmet le au moins un message (SL1, SL2, SL3, SL4, SL5) de vie collectif au moyen d'un mécanisme publish-subscribe, par multicast et/ou par broadcast.

3. Procédé suivant la revendication 1 ou 2,
dans lequel
on transmet le au moins un message (SL1, SL2, SL3, SL4, SL5) de vie collectif à la au moins une deuxième unité (20) de communication.

4. Procédé suivant l'une des revendications précédentes,
dans lequel
on transmet le au moins un message(SL1, SL2, SL3, SL4, SL5) de vie collectif à la première unité (10) de communication.

5. Procédé suivant l'une des revendications précédentes,
dans lequel,
dans le cas de plusieurs deuxièmes unités (20) de communication, on utilise, pour la transmission de données entre la première unité (10) de communication et chacune des deuxièmes unités (20) de communication, respectivement exactement une ou au moins l'une des liaisons (C1, C2, Cn) de communication logiques.

6. Procédé suivant l'une des revendications 1 à 4,
dans lequel,
dans le cas d'une seule deuxième unité (20) de communication, on utilise, pour la transmission de données entre la première unité (10) de communication et la deuxième unité (20) de communication, les plusieurs liaisons (C1, C2, Cn) de communication logiques.

7. Procédé suivant la revendication 6,
dans lequel
les liaisons (C1, C2, Cn) de communication logiques sont associées à des troisièmes unités de communication et on utilise la deuxième unité (20) de communication comme gateway entre la première unité (10) de communication et les troisièmes unités de communication.

8. Procédé suivant la revendication 7,
dans lequel
on effectue une transformation de protocole par la deuxième unité (20) de communication.

9. Procédé suivant l'une des revendications précédentes,
dans lequel
on analyse, du côté de la réception, le au moins un message (SL1, SL2, SL3, SL4, SL5) de vie collectif et on extrait l'information contenue en ce qui concerne la liaison (C1, C2, Cn) de communication logique respective utilisée pour la transmission de données.

10. Procédé suivant la revendication 9,
dans lequel
le au moins un message (SL1, SL2, SL3, SL4, SL5) de vie collectif contient en outre, pour chacun des numéros de séquence, un indicateur de liaison, au moyen duquel on associe le numéro de séquence respectif à la liaison (C1, C2, Cn) de communication logique respective.

11. Procédé suivant la revendication 9,
dans lequel
on effectue, du côté de la réception en incorporant des données (CD1, CD2) de configuration, une association du numéro de séquence respectif à la liaison (C1, C2, Cn) de communication logique respective.

12. Système (1) de communication comprenant une première unité (10) de communication et au moins une deuxième unité (20) de communication, dans lequel
- il est prévu plusieurs liaisons (C1, C2, Cn) de communication logiques pour la transmission de données entre la première unité (10) de communication et la au moins une deuxième unité (20) de communication,
- il est prévu une autre liaison (CL) de communication logique entre la première unité (10) de communication et la au moins une deuxième unité (20) de communication et
- le système (1) de communication est conçu pour transmettre, par l'intermédiaire de l'autre liaison (CL) de communication logique, au moins un message (SL1, SL2, SL3, SL4, SL5) de vie collectif, qui, en ce qui concerne plusieurs des liaisons (C1, C2, Cn) de communication logiques utilisées pour la transmission de données, contient respectivement au moins une information sous la forme d'un numéro de séquence d'une transmission de données effectuée en dernier par l'intermédiaire de la liaison (C1, C2, Cn) de communication logique respective.

13. Système (1) de communication suivant la revendication 12,
dans lequel
la première unité (10) de communication est un dispositif central de commande d'un poste d'aiguillage et la au moins une deuxième unité (20) de communication, un dispositif de commande décentralisé du poste d'aiguillage.

14. Système (1) de communication suivant la revendication 12 ou 13,
dans lequel
le système (1) de communication est conçu pour effectuer le procédé suivant l'une de revendications 2 à 12.
